# FASCICULE DE BREVET EUROPEEN

(11) **EP 2 694 912 B1**
(45) Date de publication et mention de la délivrance du brevet: **03.12.2014**
(21) Numéro de dépôt: 12717415.9
(22) Date de dépôt: 29.03.2012
(51) Int. Cl.: F42B 15/38

(54) **PIÈCE À RUPTURE PYROTECHNIQUE DÉTONANTE**
DETONIERENDES PYROTECHNISCHES BRUCHSTÜCK
DETONATING PYROTECHNIC RUPTURE PIECE

(30) Priorité: 06.04.2011 FR 1101040
(43) Date de publication de la demande: 12.02.2014
(73) Titulaire: ASTRIUM SAS, 92150 Suresnes (FR)
(72) Inventeur: KISTER, Thomas, F-78740 Vaux Sur Seine (FR); ASTIER, Joël, F-33700 Merignac (FR); GIGLEUX, Sébastien, F-78360 Montesson (FR)
(74) Mandataire: Gevers France
(86) Numéro de dépôt international: PCT/FR2012/050670
(87) Numéro de publication internationale: WO 2012/136918

(56) Documents cités:
- FR-A1- 2 861 691
- US-A- 3 362 290
- US-A- 5 372 071
- US-A- 5 585 596

## Description

La présente invention concerne une pièce à rupture pyrotechnique détonante, tout particulièrement, quoique non exclusivement, appropriée à être utilisée dans les lanceurs spatiaux. Elle sera ci-après décrite plus particulièrement dans cette dernière application.

On sait que certains éléments des lanceurs spatiaux, tels que des étages adjacents, sont reliés mécaniquement entre eux par une pièce de solidarisation destinée à assurer la transmission des efforts mécaniques entre lesdits éléments tant que cela est nécessaire et pourvue de moyens de séparation pyrotechniques à détonation, intégrés à ladite pièce, aptes à rompre celle-ci le long d'une ligne de séparation, lorsque lesdits éléments doivent être séparés les uns des autres. Des pièces semblables permettent également la découpe des structures porteuses et des coiffes de protection de satellites à bord des lanceurs.

Par le document US - A - 5 585 596, on connaît déjà une telle pièce à rupture pyrotechnique pour la solidarisation de deux éléments comportant :
- un profilé comportant deux ailes au moins approximativement parallèles, délimitant entre elles une gorge obturée, d'un côté, par un fond qui est formé par ledit profilé et qui est relié à l'un desdits éléments, et, de l'autre côté, par l'autre desdits éléments qui est rendu solidaire desdites ailes ; et
- à l'intérieur de ladite gorge :
   - un ensemble pyrotechnique qui comporte un cordeau pyrotechnique disposé dans un tube à expansion à section aplatie présentant des flancs latéraux au moins approximativement parallèles et qui est apte à engendrer une onde de détonation orthogonalement auxdits flancs latéraux ; et
   - une vessie étanche apte à être gonflée par les gaz engendrés par la mise à feu dudit ensemble pyrotechnique.

Dans ce document antérieur, le tube à expansion aplati enferme complètement le cordeau pyrotechnique et est percé d'orifices latéraux, l'ensemble pyrotechnique étant lui-même enfermé dans ladite vessie. L'unité formée par cette dernière et par ledit ensemble pyrotechnique est disposée dans ladite gorge, de façon que les flans latéraux du tube à expansion soient orthogonaux aux ailes du profilé. Par ailleurs, la partie dudit élément obturant ladite gorge est conformée en piston pour ladite gorge et est solidarisée des ailes du profilé par des rivets traversant orthogonalement lesdites ailes du profilé.

Ainsi, lorsque le cordeau pyrotechnique est mis à feu, la séparation desdits éléments s'effectue en deux temps :
- tout d'abord, l'ensemble pyrotechnique engendre une onde de détonation qui est parallèle auxdites ailes du profilé et qui cisaille lesdits rivets ;
- ensuite, les gaz engendrés par l'ensemble pyrotechnique gonfle la vessie en passant par les orifices du tube à expansion, de sorte que la vessie éjecte ledit élément hors de ladite gorge.

Une telle pièce à rupture pyrotechnique connue est avantageuse par le fait que, après cisaillement des rivets, la vessie écarte les deux éléments l'un de l'autre. Toutefois, elle présente l'inconvénient de nécessiter l'utilisation de rivets qui ne peuvent supporter et transmettre des efforts mécaniques importants entre lesdits éléments reliés par ladite pièce.

La présente invention a pour objet de remédier à cet inconvénient et de concevoir une pièce à rupture pyrotechnique à vessie étanche apte à être utilisée pour supporter et transmettre des efforts mécaniques élevés, comme cela est indispensable entre les étages consécutifs de lanceurs spatiaux.

A cette fin, selon l'invention, la pièce à rupture pyrotechnique pour la solidarisation d'un premier et d'un second éléments, ladite pièce comportant :
- un profilé comportant deux ailes au moins approximativement parallèles, délimitant entre elles une gorge obturée, d'un côté, par un fond qui est formé par ledit profilé et qui est relié au premier desdits éléments, et, de l'autre côté, par le second desdits éléments qui est rendu solidaire desdites ailes ; et
- à l'intérieur de ladite gorge :
   - un ensemble pyrotechnique qui comporte un cordeau pyrotechnique disposé dans un tube à expansion à section aplatie présentant des flancs latéraux au moins approximativement parallèles et qui est apte à engendrer une onde de détonation orthogonalement auxdits flancs latéraux ; et
   - une vessie étanche apte à être gonflée par les gaz engendrés par la mise à feu dudit ensemble pyrotechnique,
   est remarquable en ce que :
   - lesdites ailes du profilé comportent des zones de rupture préétablies ;
   - ledit tube à expansion est disposé dans ladite gorge de façon que ses flancs latéraux s'appliquent sensiblement contre lesdites ailes du profilé ;
   - ledit tube à expansion est ouvert du côté des zones de rupture préétablies des ailes du profilé ; et
   - ladite vessie étanche est disposée à l'intérieur dudit tube à expansion ouvert et enferme ledit cordeau pyrotechnique.

Par suite, lorsque le cordeau pyrotechnique est mis à feu, l'ensemble pyrotechnique engendre une onde de détonation orthogonalement (et non plus parallèlement) aux ailes dudit profilé, de sorte que ledit tube à expansion ouvert se développe transversalement en écartant lesdites ailes du profilé l'une de l'autre et en les faisant se rompre au niveau desdites zones de rupture préétablies, qui sont prévues pour assurer une tenue mécanique satisfaisante entre lesdits premier et second éléments. Ensuite, ladite vessie se déploie sous l'action des gaz provenant dudit cordeau pyrotechnique et engendre une impulsion de séparation qu'elle transmet à travers l'ouverture dudit tube à expansion.

Ainsi, dans la pièce à rupture pyrotechnique détonante conforme à la présente invention, la tenue mécanique entre lesdits premier et second éléments est assurée, d'une façon connue par ailleurs, par lesdites zones de rupture préétablies qui peuvent supporter et transmettre des efforts mécaniques importants et non pas par des rivets ne présentant qu'une faible résistance mécanique au cisaillement.

Bien que pouvant être disposées en divers emplacements desdites ailes du profilé, il est avantageux que lesdites zones de rupture préétablies se trouvent au voisinage du raccord entre lesdites ailes et ledit fond de la gorge.

De préférence, afin de présenter une large ouverture à ladite vessie, ledit tube à expansion ouvert présente une section en forme de U.

Afin de fixer la distance entre ledit cordeau pyrotechnique et lesdites zones de rupture préétablies desdites ailes du profilé, la vessie étanche peut enfermer des entretoises imposant, audit cordeau pyrotechnique, une position prédéterminée dans ladite vessie et dans ledit tube à expansion. Par ailleurs, afin de protéger ladite vessie contre des détériorations que pourraient produire ledit cordeau pyrotechnique lors de sa mise à feu, ladite vessie enferme des écrans de protection latéraux entre elle-même et ledit cordeau pyrotechnique.

Par ailleurs, afin d'accroître l'intensité de l'impulsion de séparation exercée par ladite vessie sur ledit premier élément, il est avantageux que, en regard de l'ouverture dudit tube à expansion, soit prévue une baguette à section convexe saillant en direction dudit tube à expansion. Ainsi, la vessie n'entre en contact qu'avec une surface limitée dudit premier élément. Avant mise à feu dudit cordeau pyrotechnique, il est préférable, à des fins d'efficacité, que ladite vessie étanche épouse la forme de l'intérieur dudit tube à expansion ouvert et celle de ladite baguette saillante.

Les figures du dessin annexé feront bien comprendre comment l'invention peut être réalisée. Sur ces figures, des références identiques désignent des éléments semblables.

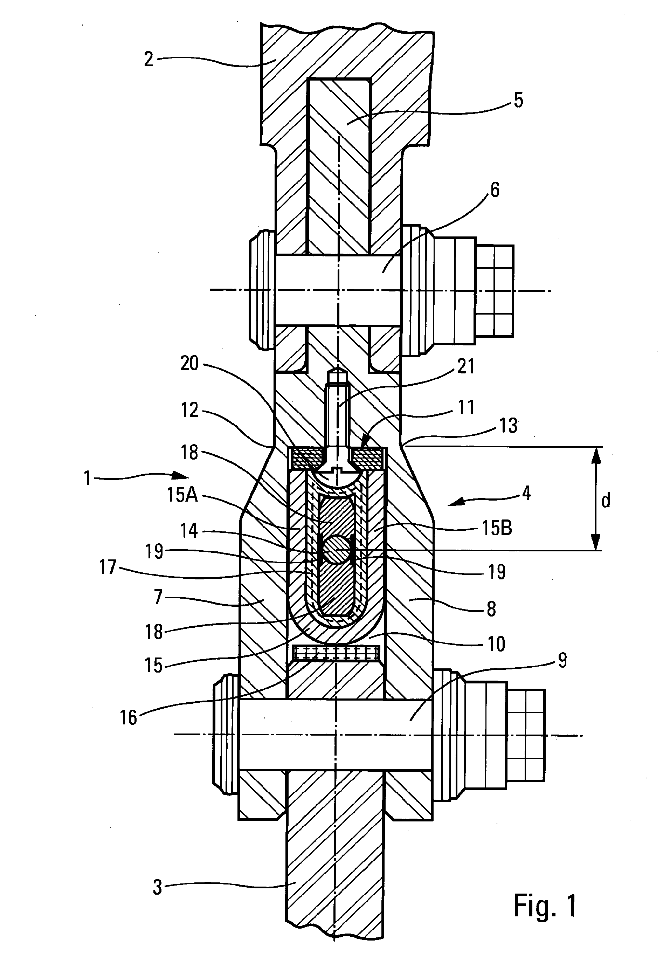

La figure 1 est une vue en coupe transversale d'une pièce à rupture pyrotechnique conforme à la présente invention, ladite pièce assurant la transmission des efforts entre deux éléments mécaniques, par exemple des étages consécutifs d'un lanceur spatial.

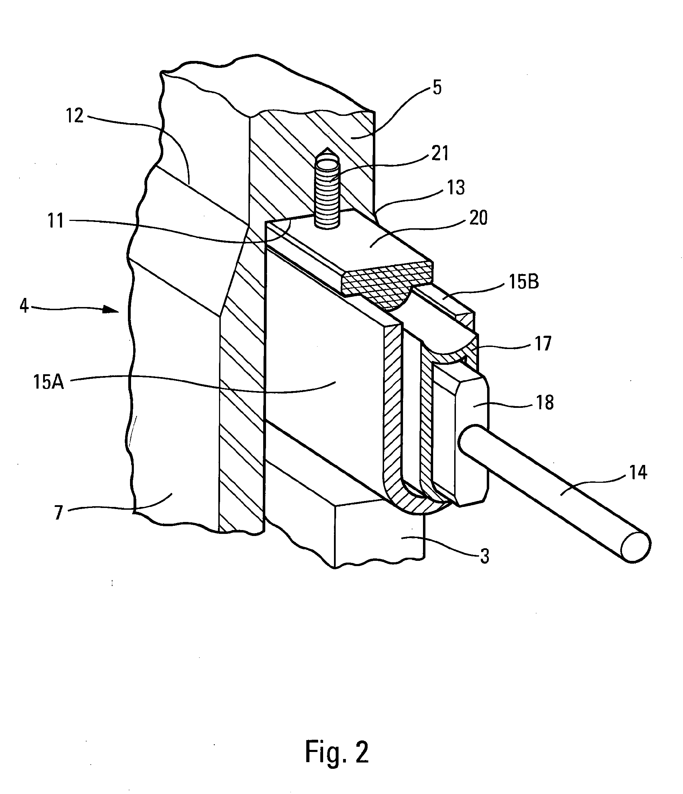

La figure 2 est une vue en perspective schématique partielle, avec arrachement, de la pièce à rupture pyrotechnique de la figure 1.
Les figures 3 et 4 illustrent, en vues semblables à la figure 1, deux étapes successives de la rupture et de la séparation de la pièce à rupture pyrotechnique conforme à la présente invention.

La pièce à rupture pyrotechnique 1, conforme à la présente invention et représentée sur ces figures, assure la tenue mécanique entre deux éléments 2 et 3, par exemple des étages consécutifs d'un lanceur spatial.

La pièce à rupture pyrotechnique 1 comporte un profilé 4 pourvu, d'un côté, d'un talon 5 servant à la solidarisation dudit profilé 4 avec l'élément 2 au moyen de boulons 6 et, de l'autre côté, de deux ailes 7 et 8 servant à la solidarisation dudit profilé 4 avec l'élément 3 au moyen de boulons 9.

Les deux ailes 7 et 8 sont au moins approximativement parallèles et elles délimitent entre elles une gorge 10 obturée, du côté de l'élément 2, par un fond 11 formé au raccord du talon 5 et des ailes 7 et 8 et, du côté de l'élément 3, par cet élément 3 lui-même.

De plus, audit raccord du talon 5 et des ailes 7 et 8, celles-ci comportent des zones de rupture préétablies 12 et 13, par exemple constituées par des zones de moindre épaisseur.

A l'intérieur de la gorge 10 est disposé un ensemble pyrotechnique qui comporte un cordeau pyrotechnique 14 et un tube à expansion 15.

Le tube à expansion 15 présente une section en forme de U et il est ouvert en direction des zones de rupture préétablies 12 et 13. Les flancs latéraux 15A, 15B du tube à expansion 15 s'appliquent sensiblement contre les ailes 7 et 8 et une cale 16 maintient ledit tube orthogonalement auxdites ailes.

Le cordeau pyrotechnique 14 est enfermé dans une vessie étanche 17, elle-même disposée dans le tube à expansion 15. A l'intérieur de la vessie étanche 17 sont disposées :
- des entretoises 18 permettant de fixer la distance d entre le cordeau pyrotechnique 14 et les zones de rupture préétablies 12, 13, et
- des écrans latéraux 19 disposés entre ledit cordeau pyrotechnique 14 et la vessie étanche 17, afin de protéger cette dernière et d'en éviter la détérioration au moment de la mise à feu dudit cordeau pyrotechnique 14.

En regard de l'ouverture du tube à expansion 15, une baguette à section convexe 20 est fixée sur le fond 11 de la gorge 10 grâce à des vis 21. La baguette fait saillie en direction du tube à expansion 15 et de la vessie étanche 17 et cette dernière épouse la forme de l'intérieur du tube à expansion 15, ainsi que la forme de la baguette saillante 20.

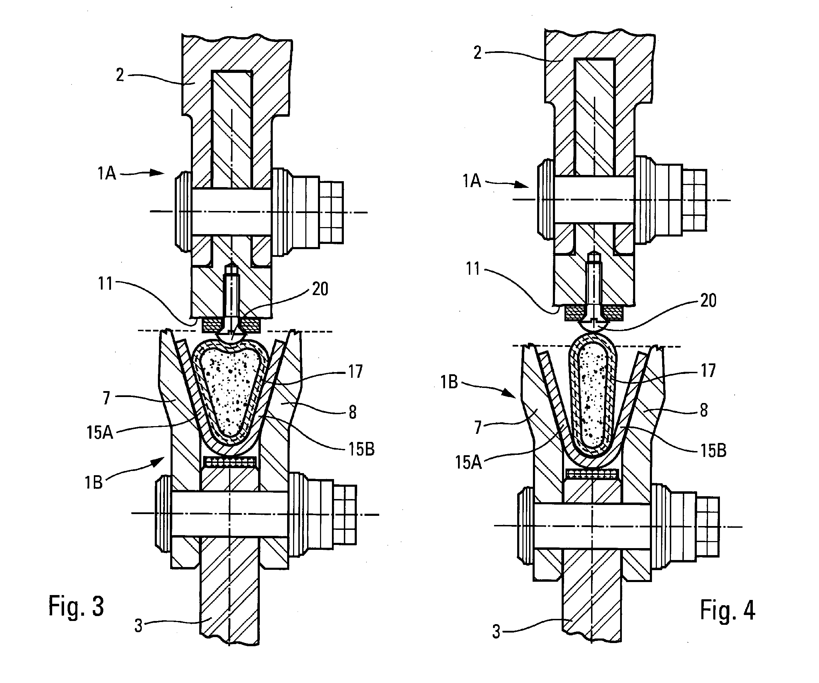

A la mise à feu du cordeau pyrotechnique 14, l'onde de détonation à grande vitesse (plusieurs milliers de m/s) engendrée par l'ensemble pyrotechnique 14, 15 orthogonalement aux ailes 7 et 8 entraîne la découpe des zones de rupture préétablies 12 et 13 et l'évasement des flancs latéraux 15A, 15B du tube à expansion 15 et desdites ailes 7 et 8 (figure 3). L'énergie de découpe mise en oeuvre est élevée du fait que le tube à expansion 15 est ouvert, de sorte qu'il n'existe pas dans celui-ci de contraintes internes périphériques. La découpe effective de la pièce en deux parties 1A et 1 B est réalisée en quelques dizaines de microsecondes, alors que la vessie 17 se gonfle avec les gaz engendrés par le cordeau pyrotechnique 14 et par la volatisation des entretoises 18 et des écrans 19.

Dans un premier temps illustré par la figure 3, la vessie 17 a naturellement tendance à s'adapter à l'évasement des flancs 15A, 15B du tube à expansion 15, tout en prenant appui sur la baguette 20.

Dans un second temps illustré par la figure 4, la vessie 17 se déploie en direction du fond 11 et engendre l'impulsion d'éjection dynamique appliquée sur la baguette 20 et permettant de séparer les parties découpées 1A et 1 B de la pièce 1 (et donc des éléments 2 et 3 qui en sont solidaires).

## Revendications

1. Pièce (1) à rupture pyrotechnique pour la solidarisation d'un premier (2) et d'un second (3) éléments, ladite pièce (1) comportant :
- un profilé (4) comportant deux ailes (7, 8) au moins approximativement parallèles, délimitant entre elles une gorge (10) obturée, d'un côté, par un fond (11) qui est formé par ledit profilé (4) et qui est relié au premier (2) desdits éléments, et, de l'autre côté, par le second (3) desdits éléments qui est rendu solidaire desdites ailes (7, 8) ; et
- à l'intérieur de ladite gorge (10) :
• un ensemble pyrotechnique qui comporte un cordeau pyrotechnique (14) disposé dans un tube à expansion (15) à section aplatie présentant des flancs latéraux (15A, 15B) ; et
• une vessie étanche (17) apte à être gonflée par les gaz engendrés par la mise à feu dudit ensemble pyrotechnique (14,15),
**caractérisée en ce que** :
- lesdites ailes (7, 8) du profilé comportent des zones de rupture préétablies (12, 13) ;
- ledit tube à expansion (15) est disposé dans ladite gorge (10) de façon que ses flancs latéraux (15A, 15B) s'appliquent sensiblement contre lesdites ailes (7, 8) du profilé (4) ;
- ledit tube à expansion (15) est ouvert du côté des zones de rupture préétablies (12, 13) des ailes (7, 8), du profilé ; et
- ladite vessie étanche (17) est disposée à l'intérieur dudit tube à expansion ouvert (15) et enferme ledit cordeau pyrotechnique (14).

2. Pièce à rupture pyrotechnique selon la revendication 1, **caractérisée en ce que** lesdites zones de rupture préétablies (12, 13) se trouvent au voisinage du raccord desdites ailes avec ledit fond (11) de la gorge (10).

3. Pièce à rupture pyrotechnique selon l'une des revendications 1 ou 2,
**caractérisée en ce que** ledit tube à expansion ouvert (15) présente une section en forme de U.

4. Pièce à rupture pyrotechnique selon l'une des revendications 1 à 3, **caractérisée en ce que** ladite vessie étanche (17) enferme au moins une entretoise (18) permettant de fixer la distance (d) entre ledit cordeau pyrotechnique (14) et lesdites zones de rupture préétablies (12, 13) desdites ailes (7, 8) du profilé.

5. Pièce à rupture pyrotechnique selon l'une des revendications 1 à 4, **caractérisée en ce que** ladite vessie étanche (17) enferme des écrans de protection latéraux (19) disposés entre ledit cordeau pyrotechnique et ladite vessie étanche (17).

6. Pièce à rupture pyrotechnique selon l'une des revendications 1 à 5, **caractérisée en ce que**, en regard de l'ouverture dudit tube à expansion (15), est prévue une baguette (20) à section convexe saillant en direction dudit tube à expansion (15).

7. Pièce à rupture pyrotechnique selon la revendication 6, **caractérisée en ce que** ladite vessie étanche (17) épouse la forme de l'intérieur dudit tube à expansion ouvert (15) et celle de ladite baguette saillante (20).

## Patentansprüche

1. Bauteil (1) mit pyrotechnischem Bruchmittel zum Verbinden eines ersten (2) und eines zweiten (3) Elements, wobei der Bauteil (1) umfasst:
- ein Profil (4), umfassend zwei annähernd parallele Schenkel (7, 8), die zwischen sich eine Rille (10) begrenzen, die auf einer Seite durch einen Boden (11), der von dem Profil (4) gebildet und mit dem ersten (2) der Elemente verbunden ist, und auf der anderen Seite durch das zweite (3) der Elemente verschlossen ist, das mit den Schenkeln (7, 8) verbunden ist; und
- im Inneren der Rille (10):
* eine pyrotechnische Einheit, die eine Zündschnur (14) umfasst, die in einem Expansionsrohr (15) mit abgeflachtem Querschnitt angeordnet ist, das Seitenflächen (15A, 15B) aufweist; und
* eine dichte Blase (17), die geeignet ist, durch die Gase, die durch die Zündung der pyrotechnischen Einheit (14, 15) erzeugt werden, aufgeblasen zu werden,
**dadurch gekennzeichnet, dass**:
- die Schenkel (7, 8) des Profils vorbestimmte Bruchzonen (12, 13) umfassen;
- das Expansionsrohr (15) in der Rille (10) derart angeordnet ist, dass sich seine Seitenflächen (15A, 15B) im Wesentlichen an die Schenkel (7, 8) des Profils (4) anlegen;
- das Expansionsrohr (15) auf der Seite der vorbestimmten Bruchzonen (12, 13) der Schenkel (7, 8) des Profils offen ist; und
- die dichte Blase (17) im Inneren des offenen Expansionsrohrs (15) angeordnet ist und die Zündschnur (14) einschließt.

2. Bauteil mit pyrotechnischem Bruchmittel nach Anspruch 1, **dadurch gekennzeichnet, dass** die vorbestimmten Bruchzonen (12, 13) in der Nähe des Anschlusses der Schenkel an den Boden (11) der Rille (10) angeordnet sind.

3. Bauteil mit pyrotechnischem Bruchmittel nach einem der Ansprüche 1 oder 2, **dadurch gekennzeichnet, dass** das offene Expansionsrohr (15) einen U-förmigen Querschnitt aufweist.

4. Bauteil mit pyrotechnischem Bruchmittel nach einem der Ansprüche 1 bis 3, **dadurch gekennzeichnet, dass** die dichte Blase (17) mindestens eine Querstrebe (18) umfasst, die es ermöglicht, den Abstand (d) zwischen der Zündschnur (14) und den vorbestimmten Bruchzonen (12, 13) der Schenkel (7, 8) des Profils festzulegen.

5. Bauteil mit pyrotechnischem Bruchmittel nach einem der Ansprüche 1 bis 4, **dadurch gekennzeichnet, dass** die dichte Blase (17) seitliche Schutzschirme (19) umfasst, die zwischen der Zündschnur und der dichten Blase (17) angeordnet sind.

6. Bauteil mit pyrotechnischem Bruchmittel nach einem der Ansprüche 1 bis 5, **dadurch gekennzeichnet, dass** gegenüber der Öffnung des Expansionsrohrs (15) ein Stab (20) mit konvexem Querschnitt vorgesehen ist, der in Richtung des Expansionsrohrs (15) vorspringt.

7. Bauteil mit pyrotechnischem Bruchmittel nach Anspruch 6, **dadurch gekennzeichnet, dass** sich die dichte Blase (17) an die Form des Inneren des offenen Expansionsrohrs (15) und jene de vorspringenden Stabs (20) anlegt.

## Claims

1. Pyrotechnic rupture part (1) for rigidly connecting a first (2) and a second (3) element, said part (1) comprising:
- a profile (4) comprising two at least approximately parallel wings (7, 8) defining between them a groove (10) closed on one hand by a bottom (11) which is formed by said profile (4) and which is connected to the first (2) of said elements, and on the other hand by the second (3) of said elements, which is rigidly connected to said wings (7, 8); and
- inside said groove (10):
• a pyrotechnic assembly which comprises a pyrotechnic fuse (14) disposed in an expansion tube (15) of flattened cross-section having lateral flanks (15A, 15B); and
• a sealed bladder (17) which can be inflated by the gases generated by firing said pyrotechnic assembly (14, 15),
**characterized in that**:
- said wings (7, 8) of the profile comprise pre-established rupture regions (12, 13);
- said expansion tube (15) is disposed in said groove (10) such that its lateral flanks (15A, 15B) rest substantially against said wings (7, 8) of the profile (4);
- said expansion tube (15) is open on the side of the pre-established rupture regions (12, 13) of the wings (7, 8) of the profile; and
- said sealed bladder (17) is disposed inside said open expansion tube (15) and encloses said pyrotechnic fuse (14).

2. Pyrotechnic rupture part according to claim 1,
**characterized in that** said pre-established rupture regions (12, 13) are located in the vicinity of the connection between said wings and said bottom (11) of the groove (10).

3. Pyrotechnic rupture part according to any one of claims 1 or 2,
**characterized in that** said open expansion tube (15) has a U-shaped cross-section.

4. Pyrotechnic rupture part according to any one of claims 1 to 3,
**characterized in that** said sealed bladder (17) encloses at least one spacer (18) for setting the distance (d) between said pyrotechnic fuse (14) and said pre-established rupture regions (12, 13) of said wings (7, 8) of the profile.

5. Pyrotechnic rupture part according to any one of claims 1 to 4,
**characterized in that** said sealed bladder (17) encloses lateral protective screens (19) disposed between said pyrotechnic fuse and said sealed bladder (17).

6. Pyrotechnic rupture part according to any one of claims 1 to 5,
**characterized in that** opposite the opening of said expansion tube (15) is provided a rod (20) of convex cross-section projecting towards said expansion tube (15).

7. Pyrotechnic rupture part according to claim 6,
**characterized in that** said sealed bladder (17) assumes the shape of the inside of said open expansion tube (15) and that of said projecting rod (20).
